# EUROPÄISCHE PATENTSCHRIFT

(11) **EP 2 057 778 B1**
(45) Veröffentlichungstag und Bekanntmachung des Hinweises auf die Patenterteilung: **11.04.2012**
(21) Anmeldenummer: 07788300.7
(22) Anmeldetag: 07.08.2007
(51) Int. Cl.: H04L 9/32

(54) **VERFAHREN ZUR AUTHENTIFIZIERUNG**
METHOD FOR AUTHENTICATION
PROCÉDÉ D'AUTHENTIFICATION

(30) Priorität: 22.08.2006 DE 10603932
(43) Veröffentlichungstag der Anmeldung: 13.05.2009
(73) Patentinhaber: Nokia Siemens Networks GmbH & Co. KG, 81541 München (DE)
(72) Erfinder: HÖHNE, Matthias, 15518 Langewahl (DE)
(86) Internationale Anmeldenummer: PCT/EP2007/058203
(87) Internationale Veröffentlichungsnummer: WO 2008/022917

(56) Entgegenhaltungen:
- EP-A- 0 388 700
- WO-A-00/79457
- US-A1- 2004 123 102

## Beschreibung

### Problem, das der Erfindung zugrunde liegt

Ein Client soll sich bei einem Server authentifizieren, ohne sein Passwort im Klartext zu übertragen. Selbst ein mit immer dem gleichen Key verschlüsseltes Passwort kann abgefangen und von nicht berechtigten Personen verwendet werden.

### Bisherige Lösung des Problems

Mit der herkömmlichen Methode wird ein vom Server verschlüsselter zufälliger signierter Challenge-Text (signed challege) vom Client angefordert und geschickt. Der Client entschlüsselt diesen, bildet ein Digest und signiert und verschlüsselt diesen wiederum (signed digest). Der Server überprüft die Digests auf Übereinstimmung. Dieses Verfahren ist sehr aufwändig.

### Mögliche andere Lösung des Problems

Man könnte ähnlich einer TAN-Liste (One Time Pad) vor der ersten Authentifizierung auf anderem Wege (z.B. Papier) eine (endliche) Liste mit Schlüsseln (Keys) austauschen, die jeweils nur einmal verwendet werden dürften. Diese Liste müsste allerdings abgespeichert oder die Keys vom Nutzer abgeschrieben werden (angreifbar bzw. umständlich und fehleranfällig).

### Lösung des Problems gemäß der Erfindung

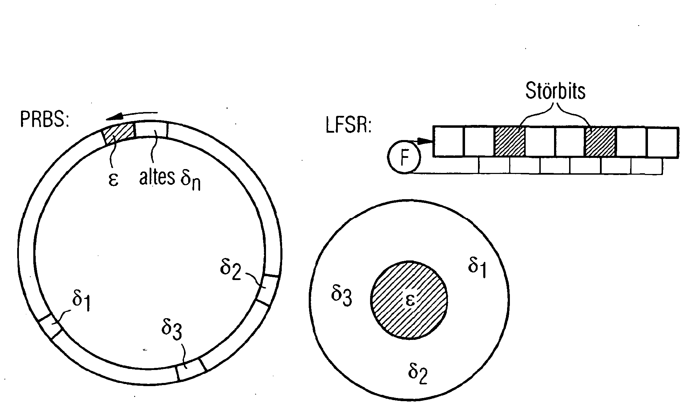

Im Folgenden wird die Erfindung mithilfe der Zeichnung, die eine Figur umfasst, näher erläutert.

Beide Seiten (Client und Server) verabreden am Anfang (als Teil eines Seed) den gleichen Startwert und den gleichen Algorithmus zur Erzeugung von Schlüsseln (Keys).

Dadurch sind Client und Server in der Lage unabhängig von einander die gleiche Sequenz von Keys zu erzeugen. Eine solchermaßen erzeugbare Sequenz wird auch als PRBS (Pseudo Random Binary Sequence) bezeichnet. Die Erzeugung einer PRBS kann z.B. mithilfe eines LFSR (Linear Feedback Shift Register) realisiert werden.

PRBS sind allerdings streng deterministisch. Daher ist nach einer kleinen Anzahl von Ergebnissen (Keys) das Verfahren zu ermitteln und ein Angreifer kennt dann alle weiteren Keys. Außerdem tritt nach einer endlichen Zahl von Schlüsseln eine exakte Wiederholung der Schlüsselfolge auf (Periode des LFSR).

Fügt man allerdings in regelmäßigen Abständen Störungen in den Ablauf (d.h. in die Bildung der Keys mithilfe des LFSR) ein, so ist das Ergebnis weder periodisch noch deterministisch.

Die Störungen im Ablauf werden wie folgt erreicht (siehe dazu auch die Figur).

Zunächst bilden Client und Server aus dem Startwert (Start-Key) mithilfe des LFSR einen ersten Key, der zur besseren Unterscheidung im Folgenden als Epsilon-Key ε bezeichnet wird. Der Epsilon-Key wird nicht zur Authentifizierung verwendet, da er angreifbar ist.

Als nächstes erzeugt nur der Client einen zweiten Key, den er zum Server sendet. Nur dieser zweite Key wird zur Authentifizierung verwendet. Um die Bildung des zweiten Keys, die von der Bildung mithilfe des LFSR abweicht, zu verstehen, erfolgt ein kleiner Exkurs in die Metrik.

### Exkurs:

Metrik bedeutet, wie der Abstand (Delta) von zwei Punkten definiert ist. Angewendet auf Zahlen, die vom Computer in Bits gespeichert werden, bedeutet dies im einfachsten Fall die Differenz zweier Zahlen. Die Differenz zweier binärer Zahlen hängt von der Wertigkeit der einzelnen Bits der Zahlen ab. Normalerweise ist die Wertigkeit der Bits durch ihre Übertragungsreihenfolge von 0 (2⁰) bis 31 (2³¹) festgelegt (alte Metrik) :

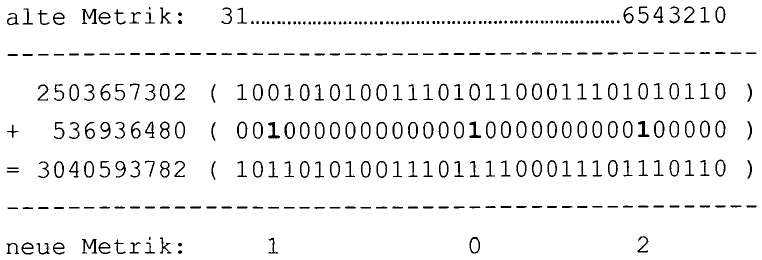

Der Abstand der Zahlen 3040593782 und 2503657302 hat nach der alten Metrik den Wert 536936480. Wird jetzt durch die Vergabe bzw. Verabredung neuer Wertigkeiten für verschiedene Bits eine neue Metrik definiert, dann haben die genannten Zahlen einen anderen Abstand. Bekommt z.B. Bit 16 die neue Wertigkeit von Bit 0 (2⁰), Bit 29 die neue Wertigkeit von Bit 1 (2¹) und Bit 5 die neue Wertigkeit von Bit 2 (2²), dann haben die beiden oben dargestellten Zahlen nur noch einen Abstand von 7. Die Reihenfolge der anderen Bits ist dafür unerheblich, jedoch nicht der Zustand (0 oder 1) der Bits. Wenn man ein Delta von bis zu 7 betrachtet, befindet sich nach der neuen Metrik die Zahl 3040593782 im Delta von 2503657302, die Zahl 2503657303 ist dagegen weiter als 7 von 2503657302 entfernt, da sich ein Bit unterscheidet, dass eine höhere Wertigkeit als 2 hat.

Bei der Erfindung erfolgt (als Teil des Seed) zwischen Client und Server eine Verabredung über die neue Metrik dadurch, dass diejenigen Bits (so genannte Störbits) verabredet werden, die abweichend von ihrer Übertragungsreihenfolge eine andere Wertigkeit haben.

Angenommen die 3040593782 sei der von Client und Server erzeugte erste Key (Epsilon-Key). Dann wird als nächster Key (zweiter Key) vom Client ein Key gebildet, dessen Abstand (Delta) nach der neuen Metrik innerhalb eines vorgegebenen Wertes zu dem Epsilon-Key liegt. Dieser Key wird im folgenden als Delta-Key δ bezeichnet. Erzeugt der Client also als nächsten Key die Zahl 478651654, so handelt es sich um einen Delta-Key, da sich diese Zahl im Delta des Epsilon-Keys 3040593782 befindet.

Da nur der Client und der Server die gemäß der Lage der Störbits geänderte neue Metrik kennen, kann der Server somit den Client anhand des empfangenen zweiten Keys authentifizieren. Ist der vom Client gesendete zweite Key innerhalb des Delta, dann ist der Client authentifiziert. Auf beiden Seiten wird dieser Schlüssel als das neue Seed verwendet und eine weitere Verschiebung im LFSR wird der neue erste Key (neuer Epsilon-Key).

In dem oben dargestellten Beispiel werden nur 32 Bit gezeigt. In der Realität sind die Zahlen noch wesentlich größer, d.h. z.B. 2048 oder 4096 Bit mit 8 oder 16 Störbits. Auch kann man andere Operationen als die Differenz für die Ermittlung des Abstands verwenden.

Sei n die Anzahl der Störbits, dann bilden alle 2ⁿ-1 Delta-Keys das Delta, also die Umgebung des Epsilon bei bekannter Metrik, die wiederum durch die Lage der Störbits beiden Seiten bekannt ist und das vom Angreifer nicht ermittelt werden kann.

Vorteile der neuen Lösung: Es muss am Anfang als Teil des Seed einmal ein Start-Key mit der herkömmlichen Methode ausgetauscht werden. Danach muss bei jeder neuen Anmeldung nur ein Key aus dem neuen Delta geschickt werden.

## Patentansprüche

1. Verfahren zur Authentifizierung eines Clients gegenüber einem Server, demgemäß
a) von dem Client und dem Server nach einem identischen Algorithmus und unabhängig voneinander ein erster Key (Epsilon-Key) erzeugt wird, wobei der genannte Algorithmus und der Startwert des Algorithmus vorher in einer geheimen Verabredung zwischen Client und Server festgelegt wurde,
b) von dem Client ein zweiter Key derart erzeugt wird, dass dessen Abstand (Delta) zu dem ersten Key innerhalb eines vorgegebenen Abstandes liegt, wobei der vorgegebene Abstand und die Metrik der Keys vorher in einer geheimen Verabredung zwischen Client und Server festgelegt wurden,
c) der genannte zweite Key an den Server gesendet wird,
d) der Client von dem Server erfolgreich authentifiziert wird, wenn der Abstand des empfangenen zweiten Keys zu dem ersten Key innerhalb des vorgegebenen Deltas liegt,
e) der genannte zweite Key als neuer Startwert für eine weitere Authentifizierung des Clients gegenüber dem Server verwendet wird, wenn der Client von dem Server erfolgreich authentifiziert wurde.

2. Verfahren gemäß Anspruch 1,
**dadurch gekennzeichnet,**
**dass** als Key binäre Zahlen verwendet werden.

3. Verfahren gemäß Anspruch 2,
**dadurch gekennzeichnet,**
**dass** als Abstand (Delta) zweier Keys die Differenz zweier binärer Zahlen verwendet wird.

4. Verfahren gemäß einem der Ansprüche 1 bis 3,
**dadurch gekennzeichnet,**
**dass** der genannte Algorithmus mit einem LFSR realisiert wird.

## Claims

1. Method for authenticating a client with respect to a server, according to which
a) a first key (epsilon key) is generated by the client and server according to an identical algorithm and independently of one another, said algorithm and the starting key of the algorithm having been previously determined in a secret agreement between the client and the server,
b) a second key is generated by the client in such a manner that the distance (delta) between said second key and the first key is within a predefined distance, the predefined distance and the metrics of the keys having been previously determined in a secret agreement between the client and the server,
c) said second key is sent to the server,
d) the client is successfully authenticated by the server if the distance between the received second key and the first key is within the predefined delta,
e) said second key is used as the new starting key for further authentication of the client with respect to the server if the client has been successfully authenticated by the server.

2. Method according to Claim 1,
**characterized in that**
binary numbers are used as the key.

3. Method according to Claim 2,
**characterized in that**
the difference between two binary numbers is used as the distance (delta) between two keys.

4. Method according to one of Claims 1 to 3,
**characterized in that**
said algorithm is implemented using an LFSR.

## Revendications

1. Procédé d'authentification d'un client par rapport à un serveur, dans lequel :
a) une première clé (clé epsilon) est générée par le client et par le serveur indépendamment l'un de l'autre selon un algorithme identique, ledit algorithme et la valeur de départ de l'algorithme ayant été fixés préalablement dans un accord secret entre le client et le serveur ;
b) une deuxième clé est générée par le client de manière telle que la distance (delta) par rapport à la première clé se trouve dans les limites d'une distance prédéterminée, la distance prédéterminée et la métrique des clés ayant été préalablement fixées dans un accord secret entre le client et le serveur ;
c) ladite deuxième clé est envoyée au serveur ;
d) le client est authentifié avec succès par le serveur lorsque la distance entre la deuxième clé reçue et la première clé se trouve dans les limites du delta prédéterminé ;
e) ladite deuxième clé est utilisée comme nouvelle valeur de départ pour une autre authentification du client par rapport au serveur lorsque le client a été identifié avec succès par le serveur.

2. Procédé selon la revendication 1, **caractérisé en ce que** des nombres binaires sont utilisés en tant que clé.

3. Procédé selon la revendication 2, **caractérisé en ce que** la différence entre deux nombres binaires est utilisée en tant que distance (delta) entre deux clés.

4. Procédé selon l'une des revendications 1 à 3, **caractérisé en ce que** ledit algorithme est réalisé avec un LFSR.
